# EUROPÄISCHE PATENTSCHRIFT

(11) **EP 1 737 644 B1**
(45) Veröffentlichungstag und Bekanntmachung des Hinweises auf die Patenterteilung: **17.11.2010**
(21) Anmeldenummer: 05716561.5
(22) Anmeldetag: 08.04.2005
(51) Int. Cl.: B29C 65/16, B29C 67/24, C09B 5/62

(54) **VERFAHREN ZUM SCHWEIßVERBINDEN VON KUNSTSTOFFTEILEN MIT HILFE VON LASERSTRAHLUNG**
METHOD FOR WELDING TOGETHER PLASTIC PARTS WITH THE AID OF LASER RADIATION
PROCEDE D'ASSEMBLAGE PAR SOUDAGE DE PIECES EN MATIERE PLASTIQUE AU MOYEN D'UN FAISCEAU LASER

(30) Priorität: 14.04.2004 DE 102004018547
(43) Veröffentlichungstag der Anmeldung: 03.01.2007
(73) Patentinhaber: BASF SE, 67056 Ludwigshafen (DE)
(72) Erfinder: BÖHM, Arno, 68305 Mannheim (DE); HAAS, Andreas, 67141 Neuhofen (DE); RAUTENBERG, Werner, 90607 Rückersdorf (DE); SIEFFERT, Michel, 55263 Wackernheim (DE)
(86) Internationale Anmeldenummer: PCT/EP2005/003689
(87) Internationale Veröffentlichungsnummer: WO 2005/102672

(56) Entgegenhaltungen:
- EP-A- 1 418 202
- WO-A-03/104232
- WO-A-2004/017717
- WO-A-2005/047010
- WO-A-2004//017717
- DE-A1- 19 512 773
- US-A1- 2003 125 429
- US-A1- 2003 130 381
- US-A1- 2003 181 721
- US-A1- 2005 003 301
- JONES I A ET AL: "USE OF INFRARED DYES FOR TRANSMISSION LASER WELDING OF PLASTICS" ANTEC. CONFERENCE PROCEEDINGS, XX, XX, 2000, Seiten 1166-1170, XP000952346

## Beschreibung

Die vorliegende Erfindung betrifft ein Verfahren zum Schweißverbinden von Kunststoffteilen mit Hilfe von Laserstrahlung einer Wellenlänge außerhalb des sichtbaren Bereichs, bei dem eines der zu verbindenden Kunststoffteile im Verbindungsbereich ein im sichtbaren Bereich des elektromagnetischen Spektrums transparentes, im wesentlichen farbloses, die Laserstrahlung absorbierendes Material aufweist.

Das Laserverscheißen von thermoplastischen Kunststoffteilen ist eine neue, wirtschaftlich hochinteressante Methode, um Kunststoffartikel mit komplexer Geometrie zu fertigen. Hierbei werden die zu verbindenden Teile zunächst in der richtigen Endlage zueinander fixiert und die Fügeflächen miteinander in Kontakt gebracht. Dann wird der Verbindungsbereich so lange durch eines der Teile hindurch mit Laserlicht bestrahlt, bis es bei dem darunter liegenden Teil zumindest zu einem oberflächlichen Aufschmelzen und damit zur Ausbildung einer Schweißverbindung zwischen den Teilen kommt, die sich in der anschließenden Abkühlphase mechanisch verfestigt.

Zur Absorption der Laserstrahlung und deren Umwandlung in Wärme für den Schmelzprozeß ist der Einsatz absorbierender Materialien erforderlich, die entweder in mindestens eines der Kunststoffteile eingearbeitet oder so auf dieses aufgebracht werden, daß sie sich im Verbindungsbereich zwischen den Kunststoffteilen befinden. Typischerweise, so z.B. auch in der EP-A-159 169, wird Ruß als IR-Laserstrahlung absorbierendes Material eingesetzt. Dies führt jedoch aufgrund der Eigenfarbe des Rußes wenn nicht zu einer Schwarzfärbung, so doch zur Nichttransparenz des Kunststoffteils bzw. des Verbindungsbereichs.

Neben Ruß wird in der DE-A-44 32 081 auch Nigrosin als IR-absorbierendes Material für das Schweißverbinden von Kunststoffteilen empfohlen. Nigrosin führt zwar nicht zu einer Verfärbung des Kunststoffs, aufgrund seiner nur geringen Absorption im NIR sind bei den gebräuchlichen Laserwellenlängen von 940 und 1064 nm jedoch vergleichsweise hohe Laserleistungen erforderlich, die leicht zur Verkokung des Kunststoffs führen. Außerdem ist Nigrosin toxisch und kanzerogen.

Aus der EP-A-126 787 und der DE-A-198 14 298 ist die Verwendung von Siliciumdioxid als Absorber für das Verschweißen von Polyethylenfolien bzw. die Herstellung eines Kraftstofftanks durch Verschweißen von zwei Kunststoffhohlkörpern bekannt. Aber auch Siliciumdioxid zeigt bei den gebräuchlichen Laserwellenlängen von 808, 940 und 1064 nm keine zufriedenstellende Absorption.

US-A-2003130381 offenbart ein Verfahren zum Schweißverbinden von Kunststoffteilen mit Hilfe von Laserstrahlung einer Wellenlänge im IR Bereich, wobei man als die Laserstrahlung absorbierendes Material mindestens eine im sichtbaren Bereich des elektromagnetischen Spektrums transparente Verbindung mit einer thermischen Beständigkeit von mindestens 200 °C einsetzt.

Schließlich wird in den WO-A-00/20157 und 03/59619 ein Verfahren zum Laserverschweißen von Kunststoffteilen beschrieben, bei dem im sichtbaren Bereich im wesentlichen nicht absorbierende Farbstoffe als IR-absorbierende Beschichtung des einen Kunststoffteils eingesetzt werden. Die verwendeten Farbstoffe weisen jedoch keine ausreichende Photostabilität bzw. Strahlungsresistenz auf. In der WO-A-03/59619 wird die Zersetzung des Farbstoffs sogar ausdrücklich erwähnt. Dementsprechend sind weder Mehrpassagenschweißen noch Quasisimultanschweißen, bei denen die Spaltüberbrückung besser ist und weniger Spannungsrisse entstehen, anwendbar, sondern es steht nur das One-Pass-Konturschweißen zur Verfügung. Außerdem reicht die Thermostabilität der genannten Farbstoffe für eine direkte Einarbeitung in die zu verschweißenden Kunststoffteile mittels konventioneller Aufschmelzmethoden, wie Extrusion, Coextrusion, Blasformung oder Spritzgießen, nicht aus. Die Farbstoffe müssen daher in einem zusätzlichen Arbeitsschritt auf eines der Kunststoffteile aufgebracht werden, was kosten- und arbeitsintensiv ist und insbesondere für eine Serienfertigung kleiner oder komplex geformter Teile ungeeignet ist. Zudem sind die verwendeten Farbstoffe und insbesondere ihre photochemischen und thermischen Abbauprodukte chemisch nicht inert und neigen zu unerwünschter Migration im Matrixpolymeren.

Der Erfindung lag daher die Aufgabe zugrunde, den genannten Nachteilen abzuhelfen und ein universell einsetzbares Verfahren bereitzustellen, nach dem Kunststoffteile auf verfahrenstechnisch einfache Weise laserverschweißt werden können.

Demgemäß wurde ein Verfahren zum Schweißverbinden von Kunststoffteilen mit Hilfe von Laserstrahlung einer Wellenlänge außerhalb des sichtbaren Bereichs, bei dem eines der zu verbindenden Kunststoffteile im Verbindungsbereich ein im sichtbaren Bereich des elektromagnetischen Spektrums transparentes, im wesentlichen farbloses, die Laserstrahlung absorbierende, nichtionische, gegen die Laserstrahlung resistente Verbindung mit einer thermischen Beständigkeit von mindestens 300°C aufweist dadurch gekennzeichnet, daß man als die nichtionische, gegen die Laserstrahlung resistente Verbindung eine Verbindung ausgewählt aus der Gruppe der Quaterrylen-3,4:13,14-tetracarbonsäurediimide, Quaterrylen-3,4-dicarbonsäuremonoimide Terrylen-3,4:11,12-tetracarbonsäurediimide und Terrylen-3,4-dicarbon-säuremonoimide, der dotierten Zinnoxide und der Hexaboride MB₆ von Lanthaniden- und Erdalkalimetallen M, einsetzt. Die Quaterrylen- und Terrylencarbonsäureimide können an den Imidstickstoffatomen und/oder am Ringgerüst substituiert oder nicht substituiert sein, vorzugsweise tragen sie an den Imidstickstoffen Alkyl- und/oder Arylreste und sind am Ringerüst unsubstituiert oder tragen 2 bis 8 Substituenten. Diese Verbindungen sind aus der EP-A-596 292 sowie den WO-A-96/22332, 02/76988, 02/66438, 02/68538 und 03/104232 bekannt.

Besonders bevorzugt sind die Quaterrylencarbonsäureimide, wobei die Quaterrylen-3,4:13,14-tetracarbonsäurediimide ganz besonders bevorzugt sind.

Besonders geeignete Quaterrylencarbonsäureimide weisen insbesondere die Formel I 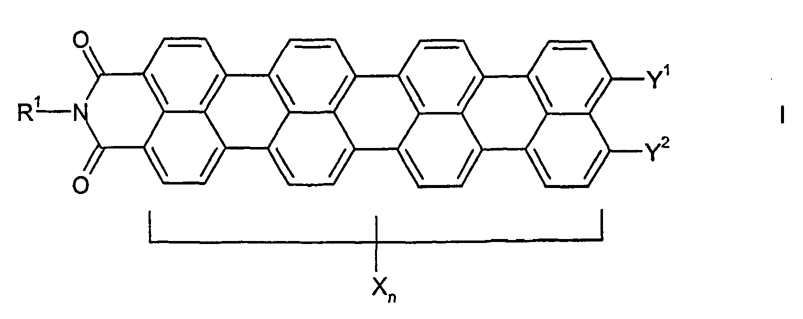 auf, in der die Variablen folgende Bedeutung haben:
- Y¹, Y²: unabhängig voneinander Wasserstoff, Brom oder Amino; zusammen einen Rest der Formel

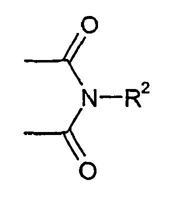

- R¹, R²: unabhängig voneinander: Wasserstoff; C₁-C₃₀-Alkyl, dessen Kohlenstoffkette durch eine oder mehrere Gruppierun- gen -O-, -S-, -NR³-, -CO- und/oder -SO₂- unterbrochen sein kann und das durch Cyano, C₁-C₆-Alkoxy, Aryl, das durch C₁-C₁₈-Alkyl oder C₁-C₆-Alkoxy substituiert sein kann, und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann; C₅-C₈-Cycloalkyl, dessen Kohlenstoffkette durch eine oder mehrere Gruppie- rungen -O-, -S-, -NR³-, -CO- und/oder -SO₂- unterbrochen sein kann und das durch C₁-C₆-Alkyl ein oder mehrfach substituiert sein kann; Aryl oder Hetaryl, das jeweils durch C₁-C₁₈-Alkyl, C₁-C₆-Alkoxy, Cyano, -CONHR⁴, -NHCOR⁴ und/oder Aryl- oder Hetarylazo, das jeweils durch C₁- C₁₀-Alkyl, C₁-C₆-Alkoxy oder Cyano substituiert sein kann, ein- oder mehrfach substituiert sein kann;
- R³: Wasserstoff oder C₁-C₆-Alkyl;
- R⁴: Wasserstoff; C₁-C₁₈-Alkyl; Aryl oder Hetaryl, das jeweils durch C₁-C₆-Alkyl, C₁-C₆-Alkoxy oder Cyano substituiert sein kann;
- X: gleich oder verschieden und unabhängig voneinander Halogen; C₁-C₁₈-Alkyl; Aryloxy, Arylthio, Hetaryloxy oder Hetarylthio, das jeweils durch C₁-C₁₂-Alkyl oder C₁-C₁₂-Alkoxy, dessen Kohlenstoffkette durch eine oder mehrere Grup- pierungen -O-, -S-, -NR³-, -CO- und/oder -SO₂- unterbrochen sein kann und das durch C₁-C₆-Alkoxy, einen über ein Stickstoffatom gebundenen, 5- bis 7- gliedrigen heterocyclischen Rest, der weitere Heteroatome enthalten und aromatisch sein kann, und/oder C₅-C₈-Cycloalkyl, dessen Kohlenstoffgerüst durch eine oder mehrere Gruppierungen -O-, -S-, -NR³-, -CO- und/oder -SO₂- unterbrochen sein kann und das ein- oder mehrfach durch C₁-C₆-Alkyl substi- tuiert sein kann, ein- oder mehrfach substituiert sein kann;
- n: 2 bis 12.

Ganz besonders geeignet sind Quaterrylencarbonsäureimide der Formel I, in der die Variablen folgende Bedeutung haben:
- Y¹, Y²: zusammen einen Rest der Formel

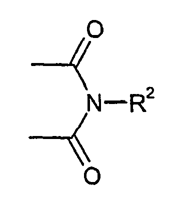

- R¹, R²: unabhängig voneinander: C₁-C₃₀-Alkyl, dessen Kohlenstoffkette durch eine oder mehrere Gruppie- rungen -O-, -NR³- und/oder -CO- unterbrochen sein kann und das durch C₁-C₆-Alkoxy, Aryl, das durch C₁-C₁₈-Alkyl oder C₁-C₆-Alkoxy substituiert sein kann, und/oder einen über ein Stickstoffatom gebundenen, 5- bis 7- gliedrigen heterocyclischen Rest, der weitere Heteroatome enthalten und aromatisch sein kann, ein- oder mehrfach substituiert sein kann; C₅-C₈-Cycloalkyl, dessen Kohlenstoffkette durch eine oder mehrere Gruppierungen -O-, -NR³- und/oder -CO- unterbrochen sein kann und das durch C₁-C₆-Alkyl ein oder mehrfach substituiert sein kann; Aryl oder Hetaryl, das jeweils durch C₁-C₁₈-Alkyl, C₁-C₆-Alkoxy, Cyano, -CONHR⁴ und/oder -NHCOR⁴ ein- oder mehrfach substituiert sein kann;
- R³: Wasserstoff oder C₁-C₆-Alkyl;
- R⁴: Wasserstoff; C₁-C₁₈-Alkyl; Aryl oder Hetaryl, das jeweils durch C₁-C₆- Alkyl, C₁-C₆-Alkoxy oder Cyano substituiert sein kann;
- X: gleich oder verschieden und unabhängig voneinander Halogen; Aryloxy oder Hetaryloxy, das jeweils durch C₁-C₁₂-Alkyl oder C₁-C₁₂-Alkoxy, des- sen Kohlenstoffkette durch eine oder mehrere Gruppierungen -O-, -NR³- und/oder -CO- unterbrochen sein kann und das durch C₁-C₆-Alkoxy, einen über ein Stickstoffatom gebundenen, 5- bis 7-gliedrigen hetero- cyclischen Rest, der weitere Heteroatome enthalten und aromatisch sein kann, und/oder C₅-C₈-Cycloalkyl, dessen Kohlenstoffgerüst durch eine oder mehrere Gruppierungen -O-, -NR³- und/oder -CO- unterbro- chen sein kann und das ein- oder mehrfach durch C₁-C₆-Alkyl substitu- iert sein kann, ein- oder mehrfach substituiert sein kann;
- n: 2 bis 8.

Als Beispiele für geeignete Reste R¹, R², R³, R⁴ und X (bzw. für deren Substituenten) seien im einzelnen genannt:
Methyl, Ethyl, Propyl, Isopropyl, Butyl, Isobutyl, tert.-Butyl, Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die obigen Bezeichnungen Isooctyl, Isononyl, Isodecyl und Isotridecyl sind Trivialbezeichnungen und stammen von den nach der Oxosynthese erhaltenen Alkoholen);
Methoxymethyl, 2-Methoxyethyl, 2-Ethoxyethyl, 2-Propoxyethyl, 2-Isopropoxyethyl, 2-Butoxyethyl, 2- und 3-Methoxypropyl, 2- und 3-Ethoxypropyl, 2- und 3-Propoxypropyl, 2- und 3-Butoxypropyl, 2- und 4-Methoxybutyl, 2- und 4-Ethoxybutyl, 2- und 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- und 4-Butoxybutyl, 4,8-Dioxadecyl, 3,6,9-Trioxadecyl, 3,6,9-Trioxaundecyl, 3,6,9-Trioxadodecyl, 3,6,9,12-Tetraoxatridecyl und 3,6,9,12-Tetraoxatetradecyl;
Methylthiomethyl, 2-Methylthioethyl, 2-Ethylthioethyl, 2-Propylthioethyl, 2-Isopropylthioethyl, 2-Butylthioethyl, 2- und 3-Methylthiopropyl, 2- und 3-Ethylthiopropyl, 2- und 3-Propylthiopropyl, 2- und 3-Butylthiopropyl, 2- und 4-Methylthiobutyl, 2- und 4-Ethylthiobutyl, 2- und 4-Propylthiobutyl, 3,6-Dithiaheptyl, 3,6-Dithiaoctyl, 4,8-Dithianonyl, 3,7-Dithiaoctyl, 3,7-Dithianonyl, 2- und 4-Butylthiobutyl, 4,8-Dithiadecyl, 3,6,9-Trithiadecyl, 3,6,9-Trithiaundecyl, 3,6,9-Trithiadodecyl, 3,6,9,12-Tetrathiatridecyl und 3,6,9,12-Tetrathiatetradecyl;
2-Monomethyl- und 2-Monoethylaminoethyl, 2-Dimethylaminoethyl, 2- und 3- Dimethylaminopropyl, 3-Monoisopropylaminopropyl, 2- und 4-Monopropylaminobutyl, 2- und 4-Dimethylaminobutyl, 6-Methyl-3,6-diazaheptyl, 3,6-Dimethyl-3,6-diazaheptyl, 3,6-Diazaoctyl, 3,6-Dimethyl-3,6-diazaoctyl, 9-Methyl-3,6,9-triazadecyl, 3,6,9-Trimethyl-3,6,9-triazadecyl, 3,6,9-Triazaundecyl, 3,6,9-Trimethyl-3,6,9-triazaundecyl, 12-Methyl-3,6,9,12-tetraazatridecyl und 3,6,9,12-Tetramethyl-3,6,9,12-tetraazatridecyl;
Propan-2-on-1-yl, Butan-3-on-1-yl, Butan-3-on-2-yl und 2-Ethylpentan-3-on-1-yl;
2-Methylsulfonylethyl, 2-Ethylsulfonylethyl, 2-Propylsulfonylethyl, 2-Isopropylsulfonylethyl, 2-Butylsulfonylethyl, 2- und 3-Methylsulfonylpropyl, 2- und 3-Ethylsulfonylpropyl, 2- und 3-Propylsulfonylpropyl, 2- und 3-Butylsulfonylpropyl, 2- und 4-Methylsulfonylbutyl, 2- und 4-Ethylsulfonylbutyl, 2- und 4-Propylsulfonylbutyl und 4-Butylsulfonylbutyl;
2-Hydroxyethyl, 3-Hydroxypropyl, 1-Hydroxyprop-2-yl, 2- und 4-Hydroxybutyl, 1-Hydroxybut-2-yl und 8-Hydroxy-4-oxaoctyl;
Cyanomethyl, 2-Cyanoethyl, 3-Cyanopropyl, 2-Methyl-3-ethyl-3-cyanopropyl, 7-Cyano-7-methylheptyl und 4,7-Dimethyl-7-cyanoheptyl;
Methoxy, Ethoxy, Propoxy, Isopropoxy, Butoxy, Isobutoxy, sec.-Butoxy, tert.-Butoxy, Pentoxy, Isopentoxy, Neopentoxy, tert.-Pentoxy und Hexoxy;
Carbamoyl, Methylaminocarbonyl, Ethylaminocarbonyl, Propylaminocarbonyl, Butylaminocarbonyl, Pentylaminocarbonyl, Hexylaminocarbonyl, Heptylaminocarbonyl, Octylaminocarbonyl, Nonylaminocarbonyl, Decylaminocarbonyl und Phenylaminocarbonyl;
Formylamino, Acetylamino, Propionylamino und Benzoylamino;
Chlor, Brom und lod;
Phenylazo, 2-Napthylazo, 2-Pyridylazo und 2-Pyrimidylazo;
Phenyl, 1- und 2-Naphthyl, 2- und 3-Pyrryl, 2-, 3- und 4-Pyridyl, 2-, 4- und 5-Pyrimidyl, 3-, 4- und 5-Pyrazolyl, 2-, 4- und 5-Imidazolyl, 2-, 4- und 5-Thiazolyl, 3-(1,2,4-Triazyl), 2-(1,3,5-Triazyl), 6-Chinaldyl, 3-, 5-, 6- und 8-Chinolinyl, 2-Benzoxazolyl, 2-Benzothiazolyl, 5-Benzothiadiazolyl, 2- und 5-Benzimidazolyl und 1- und 5- Isochinolyl;
2-, 3- und 4-Methylphenyl, 2,3-, 2,4-, 2,5-, 3,5- und 2,6-Dimethylphenyl, 2,4,6-Trimethylphenyl, 2-, 3- und 4-Ethylphenyl, 2,3-, 2,4-, 2,5-, 3,5- und 2,6-Diethylphenyl, 2,4,6-Triethylphenyl, 2-, 3- und 4-Propylphenyl, 2,3-, 2,4-, 2,5-, 3,5- und 2,6-Dipropylphenyl, 2,4,6-Tripropylphenyl, 2-, 3- und 4-Isopropylphenyl, 2,3-, 2,4-, 2,5-, 3,5- und 2,6-Diisopropylphenyl, 2,4,6-Triisopropylphenyl, 2-, 3- und 4-Butylphenyl, 2,3-, 2,4-, 2,5-, 3,5- und 2,6-Dibutylphenyl, 2,4,6-Tributylphenyl, 2-, 3- und 4-Isobutylphenyl, 2,3-, 2,4-, 2,5-, 3,5- und 2,6-Diisobutylphenyl, 2,4,6-Triisobutylphenyl, 2-, 3- und 4-sec.-Butylphenyl, 2,3-, 2,4-, 2,5-, 3,5- und 2,6-Di-sec.-butylphenyl und 2,4,6-Tri-sec.-butylphenyl, 2-, 3- und 4-tert.-Butylphenyl, 2,3-, 2,4-, 2,5-, 3,5- und 2,6-Di-tert.-butylphenyl, 2,4,6-Tri-tert.-butylphenyl; 2-, 3- und 4-Methoxyphenyl, 2,3-, 2,4-, 2,5-, 3,5- und 2,6-Dimethoxyphenyl, 2,4,6-Trimethoxyphenyl, 2-, 3- und 4-Ethoxyphenyl, 2,3-, 2,4-, 2,5-, 3,5- und 2,6-Diethoxyphenyl, 2,4,6-Triethoxyphenyl, 2-, 3- und 4-Propoxyphenyl, 2,3-, 2,4-, 2,5-, 3,5- und 2,6-Dipropoxyphenyl, 2-, 3- und 4-Isopropoxyphenyl, 2,3-, 2,4-, 2,5-, 3,5- und 2,6-Diisopropoxyphenyl und 2-, 3- und 4-Butoxyphenyl; 2-, 3- und 4-Chlorphenyl, und 2,3-, 2,4-, 2,5-, 3,5- und 2,6-Dichlorphenyl; 2-, 3- und 4-Hydroxyphenyl und 2,3-, 2,4-, 2,5-, 3,5- und 2,6-Dihydroxyphenyl; 2-, 3- und 4-Cyanophenyl; 3-und 4-Carboxyphenyl; 3- und 4-Carboxamidophenyl, 3- und 4-N-Methylcarboxamidophenyl und 3- und 4-N-Ethylcarboxamidophenyl; 3- und 4-Acetylaminophenyl, 3- und 4-Propionylaminophenyl und 3- und 4-Butyrylaminophenyl; 3- und 4-N-Phenylaminophenyl, 3- und 4-N-(o-Tolyl)aminophenyl, 3- und 4-N-(m-Tolyl)aminophenyl und 3- und 4-N-(p-Tolyl)aminophenyl; 3- und 4-(2-Pyridyl)aminophenyl, 3- und 4-(3-Pyridyl)aminophenyl, 3- und 4-(4-Pyridyl)aminophenyl, 3- und 4-(2-Pyrimidyl)aminophenyl und 4-(4-Pyrimidyl)aminophenyl;
4-Phenylazophenyl, 4-(1-Naphthylazo)phenyl, 4-(2-Naphthylazo)phenyl, 4-(4-Naphthylazo)phenyl, 4-(2-Pyridylazo)phenyl, 4-(3-Pyridylazo)phenyl, 4-(4-Pyridylazo)phenyl, 4-(2-Pyrimidylazo)phenyl, 4-(4-Pyrimidylazo)phenyl und 4-(5-Pyrimidylazo)phenyl;
Cyclopentyl, 2- und 3-Methylcyclopentyl, 2- und 3-Ethylcyclopentyl, Cyclohexyl, 2-, 3-und 4-Methylcyclohexyl, 2-, 3- und 4-Ethylcyclohexyl, 3- und 4-Propylcyclohexyl, 3- und 4-Isopropylcyclohexyl, 3- und 4-Butylcyclohexyl, 3- und 4-sec.-Butylcyclohexyl, 3- und 4-tert.-Butylcyclohexyl, Cycloheptyl, 2-, 3- und 4-Methylcycloheptyl, 2-, 3- und 4-Ethylcycloheptyl, 3- und 4-Propylcycloheptyl, 3- und 4-Isopropylcycloheptyl, 3- und 4-Butylcycloheptyl, 3- und 4-sec.-Butylcycloheptyl, 3- und 4-tert.-Butylcycloheptyl, Cyclooctyl, 2-, 3-, 4- und 5-Methylcyclooctyl, 2-, 3-, 4- und 5-Ethylcyclooctyl, 3-, 4- und 5-Propylcyclooctyl, 2-Dioxanyl, 4-Morpholinyl, 2- und 3-Tetrahydrofuryl, 1-, 2- und 3-Pyrrolidinyl und 1-, 2-, 3- und 4-Piperidyl;
Phenoxy, Phenylthio, 1- und 2-Naphthyloxy, 1- und 2-Naphthylthio, 2-, 3- und 4-Pyridyloxy, 2-, 3- und 4-Pyridylthio, 2-, 4- und 5-Pyrimidyloxy und 2-, 4- und 5-Pyrimidylthio;
Dimethylamino, Diethylamino, Dipropylamino, Diisopropylamino, Dibutylamino, Diisobutylamino, Di-tert.-butylamino, Dipentylamino, Dihexylamino, Diphenylamino, Di-o-tolylamino, Di-m-tolylamino, Di-p-tolylamino und Di(4-cyanophenyl)amino.

Die Quaterrylencarbonsäureimide können 2, 4, 6, 8 oder 12 Substituenten X am Ringgerüst tragen. Mögliche Ringpositionen für die Substituenten X sind dabei jeweils: 1,6; 1,7,10,16 bzw. 1,7,11,17 bzw. 1,6,11,16; 1,7,9,11,17,19 bzw. 1,7,9,11,16,18 bzw. 1,6,8,11,16,18 bzw. 1,6,9,11,16,19; 1,6,7,10,11,16,17,20; 1,6,7,8,9,10,11,16,17,18,19,20. Bevorzugt sind bei den Quaterrylen3,4:13,14-tetracarbonsäurediimiden die Tetrasubstitution in den Positionen 1,6,11,16 sowie die Hexasubstitution in den Positionen 1,6,8,11,16,18 bzw. 1,6,9,11,16,19 und bei den Quaterrylen-3,4-dicarbonsäuremonoimiden die Disubstitution in den Positionen 1,6 bzw. 1,7 sowie die Tetrasubstitution in den Positionen 1,6,11,16 bzw. 1,7,10,16 bzw. 1,7,11,17.

Geeignete Terrylencarbonsäureimide weisen die Formel II 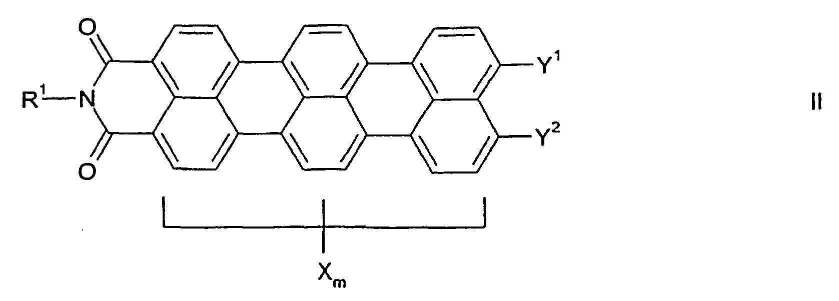 auf, in der die Variablen Y¹, Y², R¹, R², R³, R⁴ und X die für die besonders geeigneten Quaterrylencarbonsäureimide genannte Bedeutung haben und m für 2 bis 8 steht.

Besonders geeignet sind ebenfalls die Terrylen-3,4:11,12-tetracarbonsäurediimide, die vorzugsweise an den Imidstickstoffatomen Alkyl- und/oder Arylreste und am Ringgerüst 2 bis 6 Substituenten tragen.

Die Terrylencarbonsäureimide können 2, 4, 6 oder 8 Substituenten X am Ringgerüst tragen. Mögliche Ringpositionen für die Substituenten X sind dabei jeweils: 1,6; 1,7,9,15 bzw. 1,6,9,14; 1,6,7,9,14,16; 1,6,7,8,9,14,15,16. Bevorzugt ist die Disubstitution in 1,6- und die Tetrasubstitution in 1,6,9,14-Position.

Als die Laserstrahlung absorbierendes Material sind weiterhin dotierte Zinnoxide und Hexaboride MB₆ von Lanthaniden- und Erdalkalimetallen M geeignet. Diese anorganischen Absorbermaterialien sind ebenfalls bekannt und z.B. in der EP-A-1 008 564 beschrieben.

Geeignete Zinnoxide sind vor allem mit Antimon oder Indium dotiertes Zinnoxid (ATO bzw. ITO).

Als Metallhexaboride MB₆ seien insbesondere Yttrium-, Lanthan-, Cer-, Praseodym-, Neodym-, Samarium-, Europium-, Gadolinium-, Terbium-, Dysprosium-, Holmium-, Erbium-, Thulium-, Ytterbium-, Strontium- oder Calciumhexaborid genannt.

Diese Materialien werden bevorzugt in nanopartikulärer Form eingesetzt, d.h., sie weisen in der Regel mittlere Partikelgrößen von 15 bis 100 nm auf.

Die erfindungsgemäß zur Absorption der Laserstrahlung eingesetzten Materialien zeichnen sich durch eine Reihe von Vorteilen aus:
Sie sind im sichtbaren Bereich des elektromagnetischen Spektrums transparent und im wesentlichen farblos, so daß sie das Aussehen der zu verschweißenden sowie der verschweißten Kunststoffteile für das bloße Auge nur kaum bis nicht erkennbar verändern. Im IR-Bereich (etwa 700 bis 12000 nm), insbesondere auch im NIR-Bereich von 700 bis 1200 nm, weisen sie dagegen starke Absorptivität auf, so daß sie hervorragend zur Absorption der gängigen Laserwellenlängen verwendet werden können. Die polycyclischen organischen Verbindungen absorbieren insbesondere im Wellenlängenbereich von 700 bis 950 nm, vor allem 750 bis 850 nm, und können daher besonders vorteilhaft in Kombination mit einem Laser der Wellenlänge 808 nm eingesetzt werden. Die anorganischen Absorbermaterialien sind besonders für den Wellenlängenbereich von 850 bis 1200 nm, vorzugsweise 900 bis 1100 nm, und damit für gängige Laser mit Emissionswellenlängen von 940 und 1064 nm geeignet.

Außerdem sind sie gegen die Laserstrahlung resistent, werden also auch bei mehrfacher Laserbestrahlung nicht abgebaut und eignen sich damit auch für die verfahrenstechnisch günstigen Mehrpassagen- und Quasisimultanschweißverfahren.

Weiterhin weisen sie eine thermische Beständigkeit von mindestens 300°C auf und können daher ohne Zersetzung nach den gängigen, kostengünstigen und prozeßvereinfachenden Verfahren der Masseadditivierung auch direkt in die zu verschweißenden Kunststoffteile eingearbeitet werden.

Da sie weder durch thermische Belastung noch durch Bestrahlung abgebaut werden, ermöglichen sie eine genaue Einstellung der zu verschweißenden Kunststoffteile auf einen gewünschten Farbton, der durch das Verschweißen nicht verändert wird. Die Stabilität der erfindungsgemäß eingesetzten Absorbermaterialien erlaubt auch ihren Einsatz für Anwendungen, bei denen die Entstehung undefinierter Abbauprodukte ausgeschlossen werden muß, wie Anwendungen im medizinischen und im Lebensmittelverpackungsbereich.

Schließlich sind sie in allen gängigen Matrixpolymeren weitestgehend migrationsstabil, was ebenfalls eine Grundvoraussetzung für den Einsatz im medizinischen und im Lebensmittelverpackungsbereich ist.

Bei dem erfindungsgemäßen Verfahren zum Schweißverbinden von thermoplastischen Kunststoffteilen kann man also, wie jeweils gewünscht, das die Laserstrahlung absorbierende Material entweder in mindestens eines der zu verschweißenden Kunststoffteile einarbeiten oder über einen Laminierungs- oder Beschichtungsprozeß auf mindestens eines der Teile aufbringen.

Als geeignete Masseadditivierungsverfahren seien im einzelnen Extrusion, auch Coextrusion (hier beträgt die Dicke der additivierten Coextrusionsschicht in der Regel mindestens 25 µm, typischerweise 50 µm), Spritzguß, Blasformung und Knetung genannt.

Als geeignete Beschichtungsverfahren seien im einzelnen Folienlaminierung, Rollercoaten, Spincoaten, Siebdruck und Tampondruck genannt.

Die Einsatzmengen für das die Laserstrahlung absorbierende Material liegen üblicherweise im Bereich von 10 bis 5000 ppm. Je nach der gewählten Verfahrensweise sind in der Regel folgende Absorberkonzentrationen bevorzugt: masseadditivierte Platten und Spritzgußteile: je nach Dicke 10 bis 200 ppm; (auflaminierbare) Flachfolien, Schläuche und blasgeformte Teile: 20 bis 500 ppm; Coextrusionsschichten: 50 bis 1000 ppm; über Sieb- bzw. Tampondruck sowie die obengenannten Coatingprozesse aufgebrachte Schichten: je nach Schichtdicke 100 bis 5000 ppm.

Die zu verschweißenden Kunststoffteile können eine beliebige Form aufweisen. Insbesondere kann es sich bei einem oder bei beiden Teilen auch um eine Folie handeln.

Weiterhin können die zu verschweißenden Kunststoffteile aus demselben oder aus verschiedenen Matrixpolymeren aufgebaut sein. Im einfachsten Fall ist mindestens das Kunststoffteil, das das Absorbermaterial enthält, aus einem thermoplastischen Matrixpolymer aufgebaut. Es kann jedoch auch keines der zu verschweißenden Kunststoffteile aus thermoplastischem Kunststoff bestehen; in diesem Fall ist aber eine Beschichtung mindestens einen Teils mit einem thermoplastischen, das Absorbermaterial enthaltenden Kunststoff erforderlich.

Die zu verbindenden Kunststoffteile können beispielsweise aus einem Matrixpolymer aufgebaut sein, das ausgewählt ist aus der Gruppe der Polyolefine, Polyolefincopolymere, Polytetrafluoroethylene, Ethylen-Tetrafluoroethylen-Copolymere, Polyvinylchloride, Polyvinylidenchloride, Polyvinylalkohole, Polyvinylester, Polyvinylalkanale, Polyvinylketale, Polyamide, Polyimide, Polycarbonate, Polycarbonat-Blends, Polyester, Polyester-Blends, Poly(meth)acrylate, Poly(meth)acrylat-Styrolcopolymer-Blends, Poly(meth)acrylat-Polyvinylidendifluorid-Blends, Polyurethane, Polystyrole, Styrolcopolymere, Polyether, Polyetherketone und Polysulfone und deren Mischungen.

Bevorzugt sind dabei Matrixpolymere aus der Gruppe der Polyolefine, Polyolefincopolymere, Polyvinylalkanale, Polyamide, Polycarbonate, Polycarbonat-Polyester-Blends, Polycarbonat-Styrolcopolymer-Blends, Polyester, Polyester-Blends, Poly(meth)acrylate, Poly(meth)acrylat-Styrolcopolymer-Blends, Poly(meth)acrylat-Polyvinylidendifluorid-Blends, Styrolcopolymere und Polysulfone und deren Mischungen.

Besonders bevorzugte Polymere sind transparent oder zumindest transluzent. Als Beispiele seien genannt: Polypropylen, Polyvinylbutyral, Polyamid [6], Polyamid [6,6], Polycarbonat, Polycarbonat-Polyethylenterephthalat-Blends, Polycarbonat-Polybutylenterephthalat-Blends, Polycarbonat-Acrylnitril/Styrol/Acrylnitril-Copolymer-Blends, Polycarbonat-Acrylnitril/Butadien/Styrol-Copolymer-Blends, Polymethylmethacrylat-Acrylnitril/Butadien/Styrol-Copolymer-Blends (MABS), Polyethylenterephthalat, Polybutylenterephthalat, Polymethylmethacrylat, schlagzähmodifiziertes Polymethylmethacrylat, Polybutylacrylat, Polymethylmethacrylat-Polyvinylidendifluorid-Blends, Acrylnitril/Butadien/Styrol-Copolymere (ABS), Styrol/Acrylnitril-Copolymere (SAN) und Polyphenylensulfon sowie deren Mischungen.

Die Präparationen, die zur Herstellung von mit Hilfe von Laserstrahlung, deren Wellenlänge außerhalb des sichtbaren Bereichs liegt, schweißverbundenen Kunststoffteilen geeignet sind, enthalten
a) ein zur Ausbildung der Kunststoffteile geeignetes thermoplastisches Matrixpolymer,
b) mindestens ein im sichtbaren Bereich des elektromagnetischen Spektrums transparentes, im wesentlichen farbloses, die eingesetzte Laserstrahlung absorbierendes, nichtionisches, gegen die Laserstrahlung resistentes Material mit einer thermischen Beständigkeit von mindestens 300°C, ausgewählt aus der Gruppe der polycyclischen organischen Verbindungen, der dotierten Zinnoxide und der Hexaboride MB₆ von Lanthaniden- und Erdalkalimetallen M,
c) gewünschtenfalls einen oder mehrere UV-Stabilisatoren und
d) gewünschtenfalls weitere Additive.
   Sie können vorteilhaft über einen konventionellen Extrusions- oder Knetprozeß hergestellt werden. Dabei können die Komponenten b) sowie gewünschtenfalls c) und/oder d) von vornherein in dem der gewünschten Endkonzentration entsprechenden Gewichtsverhältnis mit dem Matrixpolymer a) gemischt werden (direkte Compoundierung), oder es kann zunächst eine deutlich höhere Konzentration an b) und gewünschtenfalls c) und/oder d) gewählt werden und das gebildete Konzentrat (Masterbatch) anschließend bei der Fertigung der zu verschweißenden Teile mit weiterem Matrixpolymer a) verdünnt werden.

Als UV-Stabilisatoren können handelsübliche Substanzen zum Einsatz kommen. Neben gebräuchlichen UVB- und UVA-Absorbern sind im UVA-Bereich absorbierende, mono- oder disubstituierte Naphthalimide und ihre Mischungen, z.B. Chimassorb^{®} 81 sowie Tinuvin^{®} P, 326 und 328 (Ciba SC), Cyasorb^{®} UV-1164 und UV-531 (Cytec) und Uvinul^{®} 3030, 3035, 3050 und 3088 sowie Ultraphor^{®} VL (BASF), handelsübliche Hindered Amine Light Stabilizers (HALS) und ihre N-methylierten und N-methoxylierten Derivate und Mischungen davon, z.B. Chimassorb 119 und 944 sowie Tinuvin 123, 622 und 770 (Ciba SC), N 30 (Clariant), Cyasorb 3346, 3529 und 3581 (Cytec) und Uvinul 4050 und 5050 (BASF), und Mischungen dieser Gruppen geeignet.

Als weitere Additive können die erfindungsgemäßen Präparationen gebräuchliche Kunststoffhilfsmittel, z.B. phosphitische und phenolische Antioxidantien, Prozeßhilfsmittel und Weichmacher, enthalten.

Weiterhin können die erfindungsgemäßen Präparationen Farbmittel zur Einstellung eines gewünschten Farbtones als Additive enthalten, insbesondere transparente organische Pigmente und vor allem Farbstoffe, z.B. C.I. Pigment Yellow 138, 139, 183 und 185, C.I. Pigment Red 149, 178 und 179, C.I. Pigment Violet 19 und 29, C.I. Pigment Blue 15,15:1, 15:3 und 15:4, C.I. Pigment Green 7 und 36, C.I. Solvent Yellow 93, C.I. Solvent Red 135 und 195, C.I. Solvent Blue 35, C.I. Solvent Violet 13, C.I. Solvent Green 3 und 5 sowie C.I. Solvent Orange 60 und 163.

Eine weitere mögliche Additivgruppe stellen ebenfalls den optischen Eindruck, die mechanischen Eigenschaften oder aber die Haptik modifizierende Zuschlagstoffe dar, z.B. Mattierungsmittel, wie Titandioxid, Kreide, Bariumsulfat, Zinksulfid, Füllstoffe, wie nanopartikuläres Siliciumdioxid, Aluminiumhydroxid, Lehm und andere Schichtsilikate, Glasfasern und Glaskugeln.

### Beispiele

### Beispiel 1

Die folgenden thermoplastischen Matrixpolymere wurden unter Additivierung mit NIR-Absorbern aus der Klasse der Quaterrylen-3,4:13,14-tetracarbonsäurediimide zu Spritzgußplättchen verarbeitet, die mit Hilfe von Laserstrahlung mit den entsprechenden nichtadditivierten Spritzgußplättchen schweißverbunden wurden:
(M1) Polypropylen (Metocene^{®} X 50081, Basell)
(M2) Olefin-Copolymer (TPO; Engage^{®} 8401, Exxon Mobil)
(M3) Polycarbonat (Macrolon^{®} 2800, Bayer)
(M4) Polymethylmethacrylat (Plexiglas^{®} 7N, Röhm)
(M5) Polstyrol (Polystyrol 1444 C, BASF)
(M6) Acrylnitril/Butadien/Styrol-Copolymer (ABS, Terluran^{®} GP 22, BASF)
(M7) Polymethylmethacrylat-ABS-Blend (MABS, Terlux^{®} 2802 TR, BASF)
(M8) Polysulfon (Ultrason^{®} S 2010, BASF)
(M9) Polyethylenterephthalat (PET, Polyclear^{®} T 94, Ter Hell)
(M10) Polybutylenterephthalat (PBT, Ultradur^{®} B 6550 N, BASF)
(M11) Polyamid [6] (Ultramid^{®} BS 700, BASF)

Dazu wurden die Matrixpolymere (M1) bis (M11) über einen Extrusionsschritt mit jeweils 0,01 Gew.-% (Polysulfon: 0,03 Gew.-%) N, N'-Bis(2,6-diisopropylphenyl)-quaterrylen-3,4:13,14-tetracarbonsäurediimid bzw. 0,005 Gew.-% (Polysulfon: 0,015 Gew.-%) N, N'-Bis(2,6-diisopropylphenyl)-1,6,11,16-tetra(p-tert.-octylphenoxy)quaterrylen-3,4:13,14-tetracarbonsäurediimid additiviert und dann unter Standardbedingungen zu Spritzgußplättchen (125 x 42 mm Kantenlänge) mit drei Dickenstufen (1, 2 und 3 mm) weiterverarbeitet.

Diese Plättchen wurden mit jeweils gleichdimensionierten, 3 mm dicken unadditivierten Plättchen aus demselben Material über alle drei Dickenstufen mit einem Diodenlaser DFx03 mit 808 nm Emissionswellenlänge (Fa. Rofin) unter Anwendung folgender Verfahrensparameter laserverschweißt:
(M3), (M4), (M5), (M9), (M10), (M11):
   400 µm Glasfaserkopplung, 60 mm Brennweite, Eingangsleistung P_{AV} 4,8-6,5 Watt, Streckenenergie 1,09 J/mm, Vorschubgeschwindigkeit 6-8 mm/s
(M1), (M6), (M7):
   600 µm Glasfaserkopplung, 100 mm Brennweite, Eingangsleistung P_{AV} 23-25 Watt, Vorschubgeschwindigkeit 30 mm/s
(M2):
   600 µm Glasfaserkopplung, 100 mm Brennweite, Eingangsleistung P_{AV} 22,5 Watt, Vorschubgeschwindigkeit 10 mm/s
(M8):
   600 µm Glasfaserkopplung, 100 mm Brennweite, Eingangsleistung P_{AV} 8 Watt, Vorschubgeschwindigkeit 8-10 mm/s

Die Plättchen waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen des mit dem NIR-Absorber additivierten Plättchen, d.h. die Absorption der Laserstrahlung erfolgte unabhängig von der Plättchendicke ausschließlich in der dem Laser zugewandten Oberflächenschicht des additivierten Kunststoffteils.

### Beispiel 2

Die Matrixpolymere (M1) bis (M11) aus Beispiel 1 wurden unter analog Beispiel 1 vorgenommener Additivierung mit den dort genannten NIR-Absorbern und zusätzlicher Einfärbung mit den im folgenden aufgeführten transparenten organischen Pigmenten bzw. Farbstoffen zu Spritzgußplättchen verarbeitet, die analog Beispiel 1 mit Hilfe von Laserstrahlung mit nicht mit NIR-Absorber additivierten, farblosen Spritzgußplättchen schweißverbunden wurden:
(M1), (M2), (M6), (M7):

| | |
|---|---|
| blau: | 0,2 Gew.-% C.I. Pigment Blue 15:1 |
| orange: | 0,2 Gew.-% C.I. Pigment Orange 43 |
| rot: | 0,2 Gew.-% C.I. Pigment Red 149 |
| grün: | 0,2 Gew.-% C.I. Pigment Green 36 |

(M3), (M4), (M5), (M8), (M9), (M10), (M11):

| | |
|---|---|
| blau: | 0,05 Gew.-% C.I. Solvent Blue 104 |
| orange: | 0,05 Gew.-% C.I. Solvent Orange 60 |
| rot: | 0,05 Gew.-% C.I. Solvent Red 195 |
| grün: | 0,05 Gew.-% C.I. Solvent Green 3 |

Die Plättchen waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen des mit dem NIR-Absorber additivierten Plättchen, d.h. die Absorption der Laserstrahlung erfolgte unabhängig von der Plättchendicke ausschließlich in der dem Laser zugewandten Oberflächenschicht des additivierten Kunststoffteils.

### Beispiel 3

Die Matrixpolymere (M3) bzw. (M4) wurden analog Beispiel 1 mit jeweils 0,04 Gew.-% des NIR-Absorbers Lanthanhexaborid (LaB₆), das als kommerziell erhältlicher 1 gew.- %iger Batch in PMMA (Sumitomo Metal Mining) eingesetzt wurde, additiviert und analog Beispiel 1 zu Spritzgußplättchen verarbeitet, die mit Hilfe von Laserstrahlung mit den entsprechenden nichtadditivierten Spritzgußplättchen schweißverbunden wurden. Dabei wurden jeweils zwei Schweißversuche mit verschiedenen Lasern (Variante A bzw. B) unter Anwendung folgender Verfahrensparameter durchgeführt:
Variante A:
   Diodenlaser DFx06 mit 940 nm Emissionswellenlänge (Fa. Rofin), 600 µm Glasfaserkopplung, 100 mm Brennweite, Eingangsleistung P_{AV} 200 Watt, Vorschubgeschwindigkeit 50-100 mm/s
Variante B:
   Diodengepumpter Nd:YAG-Laser SWD-Y 75 mit 1064 nm Emissionswellenlänge (Fa. Polyscan), 75 Watt Direktstrahl, 160 mm Brennweite, Eingangsleistung P_{AV} 100 Watt, Vorschubgeschwindigkeit 5-20 mm/s

Die Plättchen waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen des mit dem NIR-Absorber additivierten Plättchen, d.h. die Absorption der Laserstrahlung erfolgte unabhängig von der Plättchendicke ausschließlich in der dem Laser zugewandten Oberflächenschicht des additivierten Kunststoffteils.

### Beispiel 4

Die Matrixpolymere (M3) bzw. (M4) wurden unter analog Beispiel 3 vorgenommener Additivierung mit Lathanhexaborid und zusätzlicher Einfärbung mit den im folgenden aufgeführten transparenten organischen Pigmenten zu Spritzgußplättchen verarbeitet, die analog Beispiel 3 mit Hilfe von Laserstrahlung (jeweils Variante A und B) mit nicht mit NIR-Absorber additivierten, farblosen Spritzgußplättchen schweißverbunden wurden:
(M3), (M4):

| | |
|---|---|
| blau: | 0,02 Gew.-% C.I. Pigment Blue 15:1 |
| orange: | 0,02 Gew.-% C.I. Pigment Orange 43 |
| rot: | 0,02 Gew.-% C.I. Pigment Red 149 |
| grün: | 0,02 Gew.-% C.I. Pigment Green 7 |

Die Plättchen waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen des mit dem NIR-Absorber additivierten Plättchen, d.h. die Absorption der Laserstrahlung erfolgte unabhängig von der Plättchendicke ausschließlich in der dem Laser zugewandten Oberflächenschicht des additivierten Kunststoffteils.

### Beispiel 5

Die Matrixpolymere (M3) bzw. (M4) wurden analog Beispiel 1 mit jeweils 0,05 Gew.-% nanopartikulärem Indium-Zinn-Oxid (ITO) mit einer mittleren Partikelgröße von 35 nm, das als kommerziell erhältliche 10 gew.-%ige Präparation in Triethylenglykol-bis(2-ethylhexanoat) (Mitsubishi Chemicals) eingesetzt wurde, additiviert und analog Beispiel 1 zu Spritzgußplättchen verarbeitet, die mit Hilfe von Laserstrahlung nach den folgenden Verfahrensparametern mit den entsprechenden nichtadditivierten Spritzgußplättchen schweißverbunden wurden:
Diodengepumpter Nd:YAG-Laser SWD-Y 75 mit 1064 nm Emissionswellenlänge (Fa. Polyscan), 75 Watt Direktstrahl, 160 mm Brennweite, Eingangsleistung P_{AV} 100 Watt, Vorschubgeschwindigkeit 5-20 mm/s

Die Plättchen waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen des mit dem NIR-Absorber additivierten Plättchen, d.h. die Absorption der Laserstrahlung erfolgte unabhängig von der Plättchendicke ausschließlich in der dem Laser zugewandten Oberflächenschicht des additivierten Kunststoffteils.

### Beispiel 6

Die Matrixpolymere (M3) bzw. (M4) wurden unter analog Beispiel 5 vorgenommener Additivierung mit Indium-Zinn-Oxid und zusätzlicher Einfärbung mit den im folgenden aufgeführten Farbstoffen zu Spritzgußplättchen verarbeitet, die analog Beispiel 5 mit Hilfe von Laserstrahlung mit nicht mit NIR-Absorber additivierten, farblosen Spritzgußplättchen schweißverbunden wurden:
(M3), (M4):

| | |
|---|---|
| blau: | 0,05 Gew.-% C.I. Solvent Blue 104 |
| orange: | 0,05 Gew.-% C.I. Solvent Orange 60 |
| rot: | 0,05 Gew.-% C.I. Solvent Red 195 |
| grün: | 0,05 Gew.-% C.I. Solvent Green 3 |

Die Plättchen waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen des mit dem NIR-Absorber additivierten Plättchen, d.h. die Absorption der Laserstrahlung erfolgte unabhängig von der Plättchendicke ausschließlich in der dem Laser zugewandten Oberflächenschicht des additivierten Kunststoffteils.

### Beispiel 7

Wie in der WO-A-02177081 in Beispiel 6 beschrieben, wurden 0,76 mm dicke, jeweils mit 0,01 Gew.-% N,*N'-Bis(2,6-diisopropylphenyl)quaterrylen-3,4:13,14-tetracarbonsäurediimid (Versuch a), 0,005 Gew.-% N, N'-Bis(2,6-diisopropylphenyl)-1,6,11,16-tetra(p-tert.-octylphenoxy)quaterrylen-3,4:13,14-tetracarbonsäurediimid (Versuch b), 0,04 Gew.-% Lanthanhexaborid (Versuch c) bzw. 0,05 Gew.-% nanopartikulärem Indium-Zinn-Oxid (Versuch d) additivierte Folien aus Polyvinylbutyral (Butvar^{®}, Solutia) hergestellt und mit nichtadditivierten Folien derselben Dicke mit Hilfe von Laserstrahlung unter Anwendung der folgenden Verfahrensparameter schweißverbunden:
Versuch a) und b):
   Diodenlaser DFx03 mit 808 nm Emissionswellenlänge (Fa. Rofin), 600 µm Glasfaserkopplung, 100 mm Brennweite, Eingangsleistung P_{AV} 8 Watt, Vorschubgeschwindigkeit 8-10 mm/s
Versuch c):
   Diodenlaser DFx06 mit 940 nm Emissionswellenlänge (Fa. Rofin), 600 µm Glasfaserkopplung, 100 mm Brennweite, Eingangsleistung P_{AV} 200 Watt, Vorschubgeschwindigkeit 50-100 mm/s
Versuch d):
   Diodengepumpter Nd:YAG-Laser SWD-Y 75 mit 1064 nm Emissionswellenlänge (Fa. Polyscan), 75 Watt Direktstrahl, 160 mm Brennweite, Eingangsleistung P_{AV} 100 Watt, Vorschubgeschwindigkeit 5-20 mm/s

Die Folien waren nach dem Verschweißen unverändert und zeigten auch an der Schweißnaht keinerlei Änderung in Farbe und Transparenz. Bei Durchführung eines Zugdehnungsexperiments unter Standardbedingungen kam es in allen Fällen zu einer Zerstörung des Materials vor der Schweißnaht. Bei keiner der verschweißten Proben kam es während des Schweißvorgangs zu einem unerwünschten Durchschmelzen der mit dem NIR-Absorber additivierten Folie, d.h. die Absorption der Laserstrahlung erfolgte ausschließlich in der dem Laser zugewandten Oberflächenschicht des additivierten Kunststoffteils.

## Patentansprüche

1. Verfahren zum Schweißverbinden von Kunststoffteilen mit Hilfe von Laserstrahlung einer Wellenlänge außerhalb des sichtbaren Bereichs, bei dem eines der zu verbindenden Kunststoffteile im Verbindungsbereich ein im sichtbaren Bereich des elektromagnetischen Spektrums transparentes, im wesentlichen farbloses, die Laserstrahlung absorbierendes Material mit einer thermischen Beständigkeit von mindestens 300°C aufweist, **dadurch gekennzeichnet, daß** man als die nichtionische, gegen die Laserstrahlung resistente Verbindung eine Verbindung ausgewählt aus der Gruppe der Quaterrylen-3,4:13,14-tetracarbonsäurediimide, Quaterrylen-3,4-dicarbonsäuremonoimide, Terrylen-3,4:11,12-tetracarbonsäurediimide und Terrylen-3,4-dicarbonsäuremonoimide, der dotierten Zinnoxide und der Hexaboride MB₆ von Lanthaniden- und Erdalkalimetallen M, einsetzt.

2. Verfahren nach Anspruch 1, **dadurch gekennzeichnet, daß** man als die Laserstrahlung absorbierendes Material Quaterrylencarbonsäureimide der allgemeinen Formel I 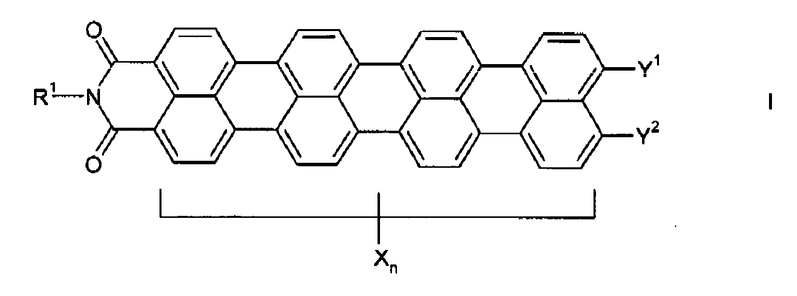 einsetzt, in der die Variablen die folgende Bedeutung haben:
Y¹, Y² unabhängig voneinander Wasserstoff, Brom oder Amino; zusammen einen Rest der Formel 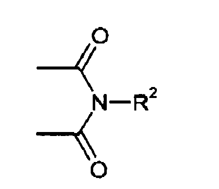
R¹, R² unabhängig voneinander: Wasserstoff; C₁-C₃₀-Alkyl, dessen Kohlenstoffkette durch eine oder mehrere Gruppie- rungen -O-, -S-, -NR³-, -CO- und/oder -SO₂- unterbrochen sein kann und das durch Cyano, C₁-C₆-Alkoxy, Aryl, das durch C₁-C₁₈-Alkyl oder C₁-C₆-Alkoxy substituiert sein kann, und/oder einen über ein Stickstoff- atom gebundenen, 5- bis 7-gliedrigen heterocyclischen Rest, der weite- re Heteroatome enthalten und aromatisch sein kann, ein- oder mehrfach substituiert sein kann; C₅-C₈-Cycloalkyl, dessen Kohlenstoffkette durch eine oder mehrere Gruppierungen -O-, -S-, -NR³-, -CO- und/oder -SO₂- unterbrochen sein kann und das durch C₁-C₆-Alkyl ein oder mehrfach substituiert sein kann; Aryl oder Hetaryl, das jeweils durch C₁-C₁₈-Alkyl, C₁-C₆-Alkoxy, Cyano, -CONHR⁴, -NHCOR⁴ und/oder Aryl- oder Hetarylazo, das jeweils durch C₁-C₁₀-Alkyl, C₁-C₆-Alkoxy oder Cyano substituiert sein kann, ein- oder mehrfach substituiert sein kann;
R³ Wasserstoff oder C₁-C₆-Alkyl;
R⁴ Wasserstoff; C₁-C₁₈-Alkyl; Aryl oder Hetaryl, das jeweils durch C₁-C₆- Alkyl, C₁-C₆-Alkoxy oder Cyano substituiert sein kann;
X gleich oder verscheiden und unabhängig voneinander Halogen; C₁-C₁₈- Alkyl; Aryloxy, Arylthio, Hetaryloxy oder Hetarylthio, das jeweils durch C₁-C₁₂-Alkyl oder C₁-C₁₂-Alk-oxy, dessen Kohlenstoffkette durch eine oder mehrere Gruppierungen -O-, -S-, -NR³-, -CO- und/oder -SO₂- un- terbrochen sein kann und das durch C₁-C₆-Alkoxy, einen über ein Stick- stoffatom gebundenen, 5- bis 7-gliedrigen heterocyclischen Rest, der weitere Heteroatome enthalten und aromatisch sein kann, und/oder C₅- C₈-Cycloalkyl, dessen Kohlenstoffgerüst durch eine oder mehrere Grup- pierungen -O-, -S-, -NR³-, -CO- und/oder -SO₂- unterbrochen sein kann und das ein- oder mehrfach durch C₁-C₆-Alkyl substituiert sein kann, ein- oder mehrfach substituiert sein kann;
n 2 bis 12.

3. Verfahren nach Anspruch 1 oder 2, **dadurch gekennzeichnet, daß** man als die Laserstrahlung absorbierendes Material Quaterrylencarbonsäureimide der allgemeinen Formel I einsetzt, in der die Variablen folgende Bedeutung haben:
Y¹, Y² zusammen einen Rest der Formel 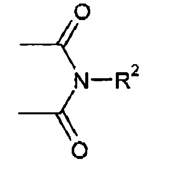
R¹, R² unabhängig voneinander: C₁-C₃₀-Alkyl, dessen Kohlenstoffkette durch eine oder mehrere Gruppie- rungen -O-, -NR³- und/oder -CO- unterbrochen sein kann und das durch C₁-C₆-Alkoxy, Aryl, das durch C₁-C₁₈-Alkyl oder C₁-C₆-Alkoxy substituiert sein kann, und/oder einen über ein Stickstoffatom gebundenen, 5- bis 7- gliedrigen heterocyclischen Rest, der weitere Heteroatome enthalten und aromatisch sein kann, ein- oder mehrfach substituiert sein kann; C₅-C₈-Cycloalkyl, dessen Kohlenstoffkette durch eine oder mehrere Gruppierungen -O-, -NR³- und/oder -CO- unterbrochen sein kann und das durch C₁-C₆-Alkyl ein oder mehrfach substituiert sein kann; Aryl oder Hetaryl, das jeweils durch C₁-C₁₈-Alkyl, C₁-C₆-Alkoxy, Cyano, -CONHR⁴ und/oder -NHCOR⁴ ein- oder mehrfach substituiert sein kann;
R³ Wasserstoff oder C₁-C₆-Alkyl;
R⁴ Wasserstoff; C₁-C₁₈-Alkyl; Aryl oder Hetaryl, das jeweils durch C₁-C₆- Alkyl, C₁-C₆-Alkoxy oder Cyano substituiert sein kann;
X gleich oder verschieden und unabhängig voneinander Halogen; Aryloxy oder Hetaryloxy, das jeweils durch C₁-C₁₂-Alkyl oder C₁-C₁₂-Alkoxy, des- sen Kohlenstoffkette durch eine oder mehrere Gruppierungen -O-, -NR³- und/oder -CO- unterbrochen sein kann und das durch C₁-C₆-Alkoxy, einen über ein Stickstoffatom gebundenen, 5- bis 7-gliedrigen hetero- cyclischen Rest, der weitere Heteroatome enthalten und aromatisch sein kann, und/oder C₅-C₈-Cycloalkyl, dessen Kohlenstoffgerüst durch eine oder mehrere Gruppierungen -O-, -NR³- und/oder -CO- unterbro- chen sein kann und das ein- oder mehrfach durch C₁-C₆-Alkyl substitu- iert sein kann, ein- oder mehrfach substituiert sein kann;
n 2 bis 8.

4. Verfahren nach Anspruch 1, **dadurch gekennzeichnet, daß** man als die Laserstrahlung absorbierendes Material Terrylencarbonsäureimide der allgemeinen Formel II 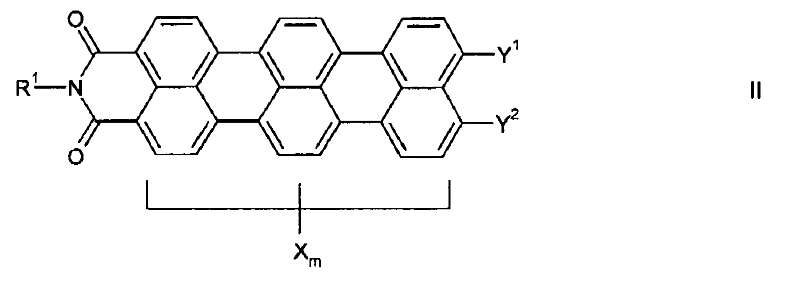 einsetzt, in der die Variablen folgende Bedeutung haben:
Y¹, Y² unabhängig voneinander Wasserstoff, Brom oder Amino; zusammen einen Rest der Formel 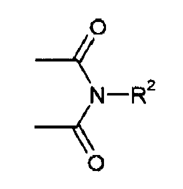
R¹, R² unabhängig voneinander: Wasserstoff; C₁-C₃₀-Alkyl, dessen Kohlenstoffkette durch eine oder mehrere Gruppie- rungen -O-, -S-, -NR³-, -CO- und/oder -SO₂- unterbrochen sein kann und das durch Cyano, C₁-C₆-Alkoxy, Aryl, das durch C₁-C₁₈-Alkyl oder C₁-C₆-Alkoxy substituiert sein kann, und/oder einen über ein Stickstoff- atom gebundenen, 5- bis 7-gliedrigen heterocyclischen Rest, der weite- re Heteroatome enthalten und aromatisch sein kann, ein- oder mehrfach substituiert sein kann; C₅-C₈-Cycloalkyl, dessen Kohlenstoffkette durch eine oder mehrere Gruppierungen -O-, -S-, -NR³-, -CO- und/oder -SO₂- unterbrochen sein kann und das durch C₁-C₆-Alkyl ein oder mehrfach substituiert sein kann; Aryl oder Hetaryl, das jeweils durch C₁-C₁₈-Alkyl, C₁-C₆-Alkoxy, Cyano, -CONHR⁴, -NHCOR⁴ und/oder Aryl- oder Hetarylazo, das jeweils durch C₁-C₁₀-Alkyl, C₁-C₆-Alkoxy oder Cyano substituiert sein kann, ein- oder mehrfach substituiert sein kann;
R³ Wasserstoff oder C₁-C₆-Alkyl;
R⁴ Wasserstoff; C₁-C₁₈-Alkyl; Aryl oder Hetaryl, das jeweils durch C₁-C₆- Alkyl, C₁-C₆-Alkoxy oder Cyano substituiert sein kann;
X gleich oder verschieden und unabhängig voneinander Halogen; C₁-C₁₈- Alkyl; Aryloxy, Arylthio, Hetaryloxy oder Hetarylthio, das jeweils durch C₁-C₁₂-Alkyl oder C₁-C₁₂-Alk-oxy, dessen Kohlenstoffkette durch eine oder mehrere Gruppierungen -O-, -S-, -NR³-, -CO- und/oder -SO₂- un- terbrochen sein kann und das durch C₁-C₆-Alkoxy, einen über ein Stick- stoffatom gebundenen, 5- bis 7-gliedrigen heterocyclischen Rest, der weitere Heteroatome enthalten und aromatisch sein kann, und/oder C₅- C₆-Cycloalkyl, dessen Kohlenstoffgerüst durch eine oder mehrere Grup- pierungen -O-, -S-, -NR³-, -CO- und/oder -SO₂- unterbrochen sein kann und das ein- oder mehrfach durch C₁-C₆-Alkyl substituiert sein kann, ein- oder mehrfach substituiert sein kann;
m 2 bis 8.

5. Verfahren nach Anspruch 1, **dadurch gekennzeichnet, daß** man als dotierte Zinnoxide nanopartikuläre mit Antimon oder Indium dotierte Zinnoxide einsetzt.

6. Verfahren nach Anspruch 1, **dadurch gekennzeichnet, daß** man als Hexaboride von Lanthaniden- und Erdalkalimetallen MB₆ nanopartikuläres Yttrium-, Lanthan-, Cer-, Praseodym-, Neodym-, Samarium-, Europium-, Gadolinium-, Terbium-, Dysprosium-, Holmium-, Erbium-, Thulium-, Ytterbium-, Strontium- oder Calciumhexaborid einsetzt.

7. Verfahren nach den Ansprüchen 1 bis 6, **dadurch gekennzeichnet, daß** das die Laserstrahlung absorbierende Material in das Kunststoffteil eingearbeitet oder auf das Kunststoffteil aufgebracht worden ist.

8. Verfahren nach Anspruch 7, **dadurch gekennzeichnet, daß** das die Laserstrahlung absorbierende Material über einen Extrusions-, Spritzguß-, Blasformungs-oder Knetprozeß in das Kunststoffteil eingearbeitet worden ist.

9. Verfahren nach Anspruch 7, **dadurch gekennzeichnet, daß** das die Laserstrahlung absorbierende Material über einen Laminierungs- oder Beschichtungsprozeß auf das Kunststoffteil aufgebracht worden ist.

10. Verfahren nach den Ansprüchen 1 bis 9, **dadurch gekennzeichnet, daß** mindestens eines der zu verbindenden Kunststoffteile eine Folie ist.

11. Verfahren nach den Ansprüchen 1 bis 10, **dadurch gekennzeichnet, daß** die zu verbindenden Kunststoffteile aus einem Matrixpolymer, ausgewählt aus der Gruppe der Polyolefine, Polyolefincopolymere, Polytetrafluoroethylene, Ethylen-Tetrafluoroethylen-Copolymere, Polyvinylchloride, Polyvinylidenchloride, Polyvinylalkohole, Polyvinylester, Polyvinylalkanale, Polyvinylketale, Polyamide, Polyimide, Polycarbonate, Polycarbonat-Blends, Polyester, Polyester-Blends, Poly-(meth)acrylate, Poly(meth)acrylat-Styrolcopolymer-Blends, Poly(meth)acrylat-Polyvinylidendifluorid-Blends, Polyurethane, Polystyrole, Styrolcopolymere, Polyether, Polyetherketone und Polysulfone und deren Mischungen, aufgebaut sind.

12. Verfahren nach den Ansprüchen 1 bis 11, **dadurch gekennzeichnet, daß** die zu verbindenden Kunststoffteile aus einem Matrixpolymer, ausgewählt aus der Gruppe der Polyolefine, Polyolefincopolymere, Polyvinylalkanale, Polyamide, Polycarbonate, Polycarbonat-Polyester-Blends, Polycarbonat-Styrolcopolymer-Blends, Polyester, Polyester-Blends, Poly(meth)acrylate, Poly(meth)acrylat-Styrolcopolymer-Blends, Poly(meth)acrylat-Polyvinylidendifluorid-Blends, Styrolcopolymere und Polysulfone und deren Mischungen, aufgebaut sind.

13. Verfahren nach den Ansprüchen 1 bis 12, **dadurch gekennzeichnet, daß** die zu verbindenden Kunststoffteile aus einem Matrixpolymer, ausgewählt aus der Gruppe Polypropylen, Polyvinylbutyral, Polyamid [6], Polyamid [6,6], Polycarbonat, Polycarbonat-Polyethylenterephthalat-Blends, Polycarbonat-Polybutylenterephthalat-Blends, Polycarbonat-Acrylnitril/Styrol/Acrylnitril-Copolymer-Blends, Polycarbonat-Acrylnitril/Butadien/Styrol-Copolymer-Blends, Polymethylmethacrylat-Acrylnitril/Butadien/Styrol-Copolymer-Blends (MABS), Polyethylenterephthalat, Polybutylenterephthalat, Polymethylmethacrylat, Polybutylacrylat, Polymethylmethacrylat-Polyvinylidendfluorid-Blends, Acrylnitril/Butadien/Styrol-Copolymere, Styrol/Acrylnitril-Copolymere und Polyphenylensulfon, aufgebaut sind.

14. Verfahren nach den Ansprüchen 1 bis 13, **dadurch gekennzeichnet, daß** man Laserstrahlung mit einer Wellenlänge im Bereich von 700 bis 12000 nm verwendet.

15. Verfahren nach den Ansprüchen 1 bis 14, **dadurch gekennzeichnet, daß** man Laserstrahlung mit einer Wellenlänge im Bereich von 700 bis 1200 nm verwendet.

16. Verfahren nach den Ansprüchen 1 bis 15, **dadurch gekennzeichnet, daß** die zu verbindenden Kunststoffteile aus einem transparenten oder zumindest transluzenten Matrixpolymer aufgebaut sind.

17. Verfahren nach den Ansprüchen 1 bis 16, **dadurch gekennzeichnet, daß** die zu verbindenden Kunststoffteile mit Farbmitteln angefärbt sind.

## Claims

1. A process for fusion-bonding plastics parts with the aid of laser radiation of a wavelength outside the visible region, in which the bonding region of one of the plastics parts to be bonded has a material which is transparent in the visible region of the electromagnetic spectrum, is substantially colorless, absorbs the laser radiation and has a thermal stability of at least 300°C, which comprises using, as the nonionic compound resistant toward the laser radiation, a compound selected from the group of the quaterrylene-3,4:13,14-tetracarboximides, quaterrylene-3,4-dicarboximides, terrylene-3,4:11,12-tetracarboximides or terrylene-3,4-dicarboximides, the doped tin oxides and the hexaborides MB₆ of lanthanides and alkaline earth metals M.

2. The process according to claim 1, wherein quaterrylenecarboximides of the
general formula I 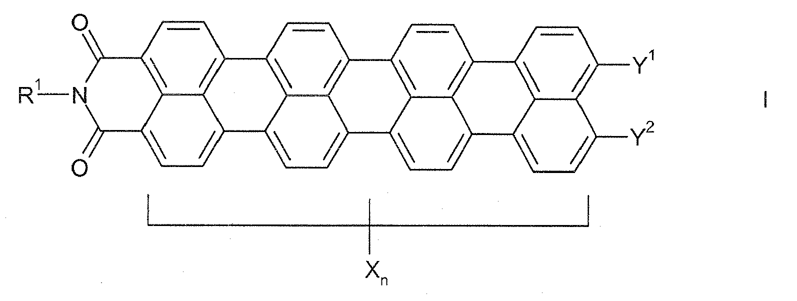 in which the variables are each defined as follows:
Y¹, Y² are each independently hydrogen, bromine or amino; together a radical of the formula 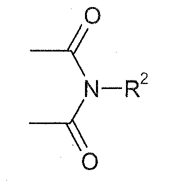
R¹, R² are each independently: hydrogen; C₁-C₃₀-alkyl whose carbon chain may be interrupted by one or more -O-, -S-, -NR³-, -CO- and/or -SO₂- moieties and which may be mono- or polysubstituted by cyano, C₁-C₆-alkoxy, aryl which may be substituted by C₁-C₁₈-alkyl or C₁-C₆-alkoxy, and/or a 5- to 7- membered heterocyclic radical which is bonded via a nitrogen atom and may comprise further heteroatoms and be aromatic; C₅-C₈-cycloalkyl whose carbon chain may be interrupted by one or more -O-, -S-, -NR³-, -CO- and/or -SO₂- moieties and which may be mono- or polysubstituted by C₁-C₆-alkyl; aryl or hetaryl, each of which may be mono- or polysubstituted by C₁-C₁₈-alkyl, C₁-C₆-alkoxy, cyano, -CONHR⁴, -NHCOR⁴ and/or aryl- or hetarylazo, each of which may be substituted by C₁-C₁₀-alkyl, C₁- C₆-alkoxy or cyano;
R³ is hydrogen or C₁-C₆-alkyl;
R⁴ is hydrogen; C₁-C₁₈-alkyl; aryl or hetaryl, each of which may be substituted by C₁-C₆-alkyl, C₁-C₆-alkoxy or cyano;
X are the same or different and are each independently halogen; C₁-C₁₈-alkyl; aryloxy, arylthio, hetaryloxy or hetarylthio, each of which may be mono- or polysubstituted by C₁-C₁₂-alkyl or C₁-C₁₂- alkoxy whose carbon chain may be interrupted by one or more -O-, -S-, -NR³-, -CO- and/or -SO₂- moieties and which may be substituted by C₁-C₆-alkoxy, a 5- to 7-membered heterocyclic radical which is bonded via a nitrogen atom and may comprise further heteroatoms and be aromatic, and/or C₅-C₈-cycloalkyl whose carbon skeleton may be interrupted by one or more -O-, -S-, -NR³-, -CO- and/or -SO₂- moieties and which may be mono- or polysubstituted by C₁-C₆-alkyl;
n is from 2 to 12;
are used as materials absorbing the laser radiation.

3. The process according to claim 1 or 2, wherein quaterrylenecarboximides of the general formula I in which the variables are each defined as follows:
Y¹, Y² together are a radical of the formula 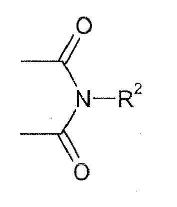
R¹, R² are each independently: C₁-C₃₀-alkyl whose carbon chain may be interrupted by one or more -O-, -NR³- and/or -CO- moieties and which may be mono- or polysubstituted by C₁-C₆-alkoxy, aryl which may be substituted by C₁-C₁₈-alkyl or C₁-C₆-alkoxy, and/or a 5- to 7-membered heterocyclic radical which is bonded via a nitrogen atom and may comprise further heteroatoms and be aromatic; C₅-C₈-cycloalkyl whose carbon chain may be interrupted by one or more -O-, -NR³- and/or -CO- moieties and which may be mono- or polysubstituted by C₁-C₆-alkyl; aryl or hetaryl, each of which may be mono- or polysubstituted by C₁-C₁₈-alkyl, C₁-C₆-alkoxy, cyano, -CONHR⁴ and/or -NHCOR⁴;
R³ is hydrogen or C₁-C₆-alkyl;
R⁴ is hydrogen; C₁-C₁₈-alkyl; aryl or hetaryl, each of which may be substituted by C₁-C₆-alkyl, C₁-C₆-alkoxy or cyano;
X are the same or different and are each independently halogen; aryloxy or hetaryloxy, each of which may be mono- or polysubstituted by C₁-C₁₂-alkyl or C₁-C₁₂-alkoxy whose carbon chain may be interrupted by one or more -O-, -NR³- and/or -CO- moieties and which may be substituted by C₁-C₆-alkoxy, a 5- to 7- membered heterocyclic radical which is bonded via a nitrogen atom and may comprise further heteroatoms and be aromatic, and/or C₅- C₈-cycloalkyl whose carbon skeleton may be interrupted by one or more -O-, -NR³- and/or -CO- moieties and which may be mono- or polysubstituted by C₁-C₆-alkyl;
n is from 2 to 8;
are used as materials absorbing the laser radiation.

4. The process according to claim 1, wherein terrylenecarboximides of the
general formula II 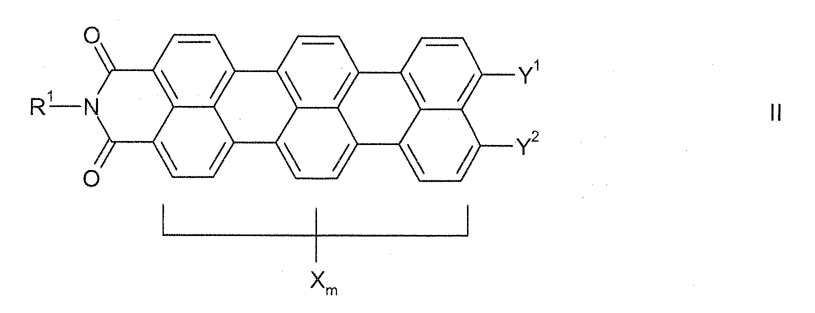 in which the variables are each defined as follows:
Y¹, Y² are each independently hydrogen, bromine or amino; together a radical of the formula 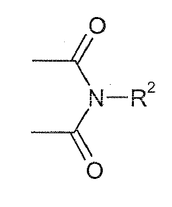
R¹, R² are each independently: hydrogen; C₁-C₃₀-alkyl whose carbon chain may be interrupted by one or more -O-, -S-, -NR³-, -CO- and/or -SO₂- moieties and which may be mono- or polysubstituted by cyano, C₁-C₆-alkoxy, aryl which may be substituted by C₁-C₁₈-alkyl or C₁-C₆-alkoxy, and/or a 5- to 7- membered heterocyclic radical which is bonded via a nitrogen atom and may comprise further heteroatoms and be aromatic; C₅-C₈-cycloalkyl whose carbon chain may be interrupted by one or more -O-, -S-, -NR³-, -CO- and/or -SO₂- moieties and which may be mono- or polysubstituted by C₁-C₆-alkyl; aryl or hetaryl, each of which may be mono- or polysubstituted by C₁-C₁₈-alkyl, C₁-C₆-alkoxy, cyano, -CONHR⁴, -NHCOR⁴ and/or aryl- or hetarylazo, each of which may be substituted by C₁-C₁₀-alkyl, C₁- C₆-alkoxy or cyano;
R³ is hydrogen or C₁-C₆-alkyl;
R⁴ is hydrogen; C₁-C₁₈-alkyl; aryl or hetaryl, each of which may be substituted by C₁-C₆-alkyl, C₁-C₆-alkoxy or cyano;
X are the same or different and are each independently halogen; C₁-C₁₈-alkyl; aryloxy, arylthio, hetaryloxy or hetarylthio, each of which may be mono- or polysubstituted by C₁-C₁₂-alkyl or C₁-C₁₂- alkoxy whose carbon chain may be interrupted by one or more -O-, -S-, -NR³-, -CO- and/or -SO₂- moieties and which may be substituted by C₁-C₆-alkoxy, a 5- to 7-membered heterocyclic radical which is bonded via a nitrogen atom and may comprise further heteroatoms and be aromatic, and/or C₅-C₈-cycloalkyl whose carbon skeleton may be interrupted by one or more -O-, -S-, -NR³-, -CO- and/or -SO₂- moieties and which may be mono- or polysubstituted by C₁-C₆-alkyl;
m is from 2 to 8;
are used as materials absorbing the laser radiation.

5. The process according to claim 1, wherein the doped tin oxides used are nanoparticulate tin oxides doped with antimony or indium.

6. The process according to claim 1, wherein the hexaborides of lanthanides and alkaline earth metals MB₆ used are nanoparticulate yttrium hexaboride, lanthanum hexaboride, cerium hexaboride, praseodymium hexaboride, neodymium hexaboride, samarium hexaboride, europium hexaboride, gadolinium hexaboride, terbium hexaboride, dysprosium hexaboride, holmium hexaboride, erbium hexaboride, thulium hexaboride, ytterbium hexaboride, strontium hexaboride or calcium hexaboride.

7. The process according to claims 1 to 6, wherein the material which absorbs the laser radiation has been incorporated into the plastics part or has been applied to the plastics part.

8. The process according to claim 7, wherein the material which absorbs the laser radiation has been incorporated into the plastics part via an extrusion, injection molding, blow molding or kneading process.

9. The process according to claim 7, wherein the material which absorbs the laser radiation has been applied to the plastics part via a lamination or coating process.

10. The process according to claims 1 to 9, wherein at least one of the plastics parts to be joined is a film.

11. The process according to claims 1 to 10, wherein the plastics parts to be joined are composed of a matrix polymer selected from the group of the polyolefins, polyolefin copolymers, polytetrafluoroethylenes, ethylene-tetrafluoroethylene copolymers, polyvinyl chlorides, polyvinylidene chlorides, polyvinyl alcohols, polyvinyl esters, polyvinyl alkanals, polyvinyl ketals, polyamides, polyimides, polycarbonates, polycarbonate blends, polyesters, polyester blends, poly(meth)acrylates, poly(meth)acrylate-styrene copolymer blends, poly(meth)acrylate-polyvinylidene difluoride blends, polyurethanes, polystyrenes, styrene copolymers, polyethers, polyether ketones and polysulfones and mixtures thereof.

12. The process according to claims 1 to 11, wherein the plastics parts to be joined are composed of a matrix polymer selected from the group of the polyolefins, polyolefin copolymers, polyvinyl alkanals, polyamides, polycarbonates, polycarbonate-polyester blends, polycarbonate-styrene copolymer blends, polyesters, polyester blends, poly(meth)acrylates, poly(meth)acrylate-styrene copolymer blends, poly(meth)acrylate-polyvinylidene difluoride blends, styrene copolymers and polysulfones and mixtures thereof.

13. The process according to claims 1 to 12, wherein the plastics parts to be joined are composed of a matrix polymer selected from the group of polypropylene, polyvinylbutyral, nylon-[6], nylon-[6,6], polycarbonate, polycarbonate-polyethylene terephthalate blends, polycarbonate-polybutylene terephthalate blends, polycarbonate-acrylonitrile/styrene/acrylonitrile copolymer blends, polycarbonate-acrylonitrile/butadiene/styrene copolymer blends, polymethyl methacrylate-acrylonitrile/butadiene/styrene copolymer blends (MABS), polyethylene terephthalate, polybutylene terephthalate, polymethyl methacrylate, polybutyl acrylate, polymethyl methacrylate-polyvinylidene difluoride blends, acrylonitrile/butadiene/styrene copolymers, styrene/acrylonitrile copolymers and polyphenylenesulfone.

14. The process according to claims 1 to 13, wherein laser radiation having a wavelength in the range from 700 to 12 000 nm is used.

15. The process according to claims 1 to 14, wherein laser radiation having a wavelength in the range from 700 to 1200 nm is used.

16. The process according to claim 1 to 15, wherein the plastics parts to be joined are formed from a transparent or at least translucent matrix polymer.

17. The process according to claims 1 to 16, wherein the plastics parts to be joined have been tinted with colorants.

## Revendications

1. Procédé pour l'assemblage par soudage de pièces en matière plastique à l'aide d'un rayonnement laser d'une longueur d'onde au-delà de la région visible, dans lequel l'une des pièces en matière plastique à assembler comporte une matière pratiquement incolore, transparente dans la région visible du spectre électromagnétique, absorbant le rayonnement laser, ayant une résistance thermique d'au moins 300 °C, **caractérisé en ce qu'**on utilise comme composé non ionique, résistant au rayonnement laser, un composé choisi dans le groupe des quaterrylène-3,4:13,14-tétracarbodiimides, quaterrylène-3,4-dicarbomonoimides, terrylène-3,4:11,12-tétracarbodiimides et terrylène-3,4-dicarbomono-imides, des oxydes d'étain dopés et des hexaborures MB₆ de lanthanides et de métaux alcalino-terreux M.

2. Procédé selon la revendication 1, **caractérisé en ce qu'**on utilise comme matière absorbant le rayonnement laser des quaterrylènecarbonimides de formule générale I 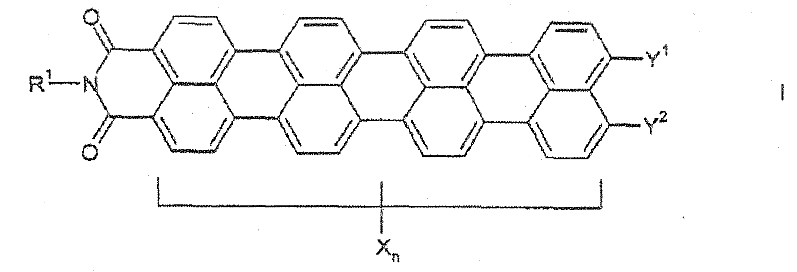 dans laquelle les variables ont les significations suivantes :
Y¹, Y² représentent, indépendamment l'un de l'autre, un atome d'hydrogène, de brome ou un groupe amino ; ensemble un radical de formule 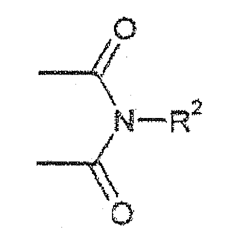
R¹, R² représentent, indépendamment l'un de l'autre, un atome d'hydrogène ; un groupe alkyle en C₁-C₃₀, dont la chaîne carbonée peut être interrompue par un ou plusieurs groupements -O-, -S-, -NR³-, -CO- et/ou -SO₂- et qui peut être substitué par cyano, alcoxy en C₁-C₆, aryle, qui peut être substitué par alkyle en C₁-C₁₈ ou alcoxy en C₁-C₆, et/ou peut être une ou plusieurs fois substitué par un radical hétérocyclique à 5- 7 chaînons, lié par un atome d'azote, qui peut contenir d'autres hétéroatomes et être aromatique ; un groupe cycloalkyle en C₅-C₈, dont la chaîne carbonée peut être interrompue par un ou plusieurs groupements -O-, -S-, -NR³-, -CO- et/ou -SO₂- et qui peut être une ou plusieurs fois substitué par alkyle en en C₁-C₆ ; un groupe aryle ou hétéroaryle, qui peut dans chaque cas être une ou plusieurs fois substitué par alkyle en C₁-C₁₈, alcoxy en C₁-C₆, cyano, -CONHR⁴, NHCOR⁴ et/ou arylazo ou hétéroarylazo, qui peut dans chaque cas être substitué par alkyle en C₁-C₁₀, alcoxy en C₁-C₆ ou cyano ;
R³ représente un atome d'hydrogène ou un groupe alkyle en C₁-C₆ ;
R⁴ représente un atome d'hydrogène, un groupe alkyle en C₁-C₁₈, aryle ou hétéroaryle, qui peut dans chaque cas être une ou plusieurs fois substitué par alkyle en C₁-C₆, alcoxy en C₁-C₆ ou cyano ;
les X sont identiques ou différents et représentent, indépendamment les uns des autres, un atome d'halogène ; un groupe alkyle en C₁-C₁₈; un groupe aryloxy, arylthio, hétéroaryloxy ou hétéroarylthio, qui peut dans chaque cas être une ou plusieurs fois substitué par alkyle en C₁-C₁₂ ou alcoxy en C₁-C₁₂, dont la chaîne carbonée peut être interrompue par un ou plusieurs groupements -O-, -S-, -NR³-, -CO- et/ou -SO₂- et qui peut être une ou plusieurs fois substitué par alcoxy en C₁-C₆, par un radical hétérocyclique à 5-7 chaînons, lié par un atome d'azote, qui peut contenir d'autres hétéroatomes et être aromatique et/ou par un groupe cycloalkyle en C₅-C₈, dont la chaîne carbonée peut être interrompue par un ou plusieurs groupements -O-, -S-, -NR³-, -CO- et/ou -SO₂- et qui peut être une ou plusieurs fois substitué par alkyle en C₁-C₆ ;
n vaut de 2 à 12.

3. Procédé selon la revendication 1 ou 2, **caractérisé en ce qu'**on utilise comme matière absorbant le rayonnement laser des quaterrylènecarbonimides de
formule générale I, dans lesquels les variables ont les significations suivantes :
Y¹, Y² représentent ensemble un radical de formule 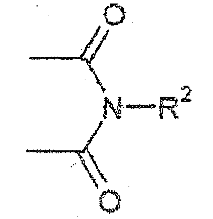
R¹; R² représentent, indépendamment l'un de l'astre un groupe alkyle en C₁-C₃₀, dont la chaîne carbonée peut être interrompue par un ou plusieurs groupements -O-, -NR³- et/ou -CO- et qui peut être, substitué par alcoxy en C₁-C₆, aryle, qui peut être substitué par alkyle en C₁-C₁₈ ou alcoxy en C₁-C₆, et/ou peut être une ou plusieurs fois substitué par un radical hétérocyclique à 5-7 chaînons, lié par un atome d'azote, qui peut contenir d'autres hétéroatomes et être aromatique ; un groupe cycloalkyle en C₅-C₈, dont la chaîne carbonée peut être interrompue par un ou plusieurs groupements -O-, -NR³- et/ou -CO- et qui peut être une ou plusieurs fois substitué par alkyle en en C₁-C₆ ; un groupe aryle ou hétéroaryle, qui peut dans chaque cas être une ou plusieurs fois substitué par alkyle en C₁-C₁₈, alcoxy en C₁-C₆, cyano, -CONHR⁴ t/ou NHCOR⁴;
R³ représente un atome d'hydrogène ou un groupe alkyle en C₁-C₆ ;
R⁴ représente un atome d'hydrogène ; un groupe alkyle en C₁-C₁₈ ; aryle ou hétéroaryle, qui peut dans chaque cas être substitué par alkyle en C₁-C₆, alcoxy en C₁-C₆ ou cyano ;
les X sont identiques ou différents et représentent, indépendamment les uns des autres, un atome d'halogène ; un groupe aryloxy ou
< hétéroaryloxy, qui peut dans chaque cas être une ou plusieurs fois substitué par alkyle en C₁-C₁₂ ou alcoxy en C₁-C₁₂, dont la chaîne carbonée peut être interrompue par un ou plusieurs groupements -O-, ₋NR³- et/ou -CO- et qui peut être une ou plusieurs fois substitué par alcoxy en C₁-C₆, par un radical hétérocyclique à 5-7 chaînons, lié par un atome d'azote, qui peut contenir d'autres hétéroatomes et être aromatique et/ou par un groupe cycloalkyle en C₅-C₈, dont la chaîne carbonée peut être interrompue par un ou plusieurs groupements -O-, -NR³- et/ou -CO- et qui peut être une ou plusieurs fois substitué par alkyle en C₁-C₆ ;
n vaut de 2 à 12.

4. Procédé selon la revendication 1, **caractérisé en ce qu'**on utilise comme matière absorbant le rayonnement laser des terrylènecarbonimides de formule générale II 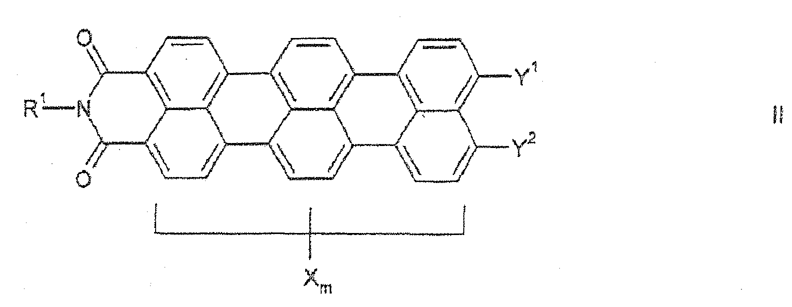 dans laquelle les variables ont les significations suivantes :
Y¹, Y² représentent, indépendamment l'un de l'autre, un atome d'hydrogène, de brome ou un groupe amino ; ensemble un radical de formule 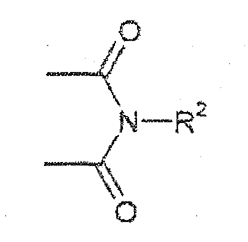
R¹, R² représentent, indépendamment l'un de l'autre, un atome d'hydrogène ; un groupe alkyle en C₁-C₃₀, dont la chaîne carbonée peut être interrompue par un ou plusieurs groupements -O-, -S-, -NR³-, -CO- et/ou -SO₂- et qui peut être substitué par cyano, alcoxy en C₁-C₆, aryle, qui peut être substitué par alkyle en C₁-C₁₈ ou alcoxy en C₁-C₆, et/ou peut être une ou plusieurs fois substitué par un radical hétérocyclique à 5- 7 chaînons, lié par un atome d'azote, qui peut contenir d'autres hétéroatomes et être aromatique ; un groupe cycloalkyle en C₅-C₈, dont la chaîne carbonée peut être interrompue par un ou plusieurs groupements -O-, -S-, -NR³-, -CO- et/ou -SO₂- et qui peut être une ou plusieurs fois substitué par alkyle en en C₁-C₆ ; un groupe aryle ou hétéroaryle, qui peut dans chaque cas être une ou plusieurs fois substitué par alkyle en C₁-C₁₈, alcoxy en C₁-C₆, cyano, -CONHR⁴, NHCOR⁴ et/ou arylazo ou hétéroarylazo, qui peut dans chaque cas être substitué par alkyle en C₁-C₁₀, alcoxy en C₁-C₆ ou cyano ;
R³ représente un atome d'hydrogène ou un groupe alkyle en C₁-C₆ ;
R⁴ représente un atome d'hydrogène ; un groupe alkyle en C₁-C₁₈ ; aryle ou hétéroaryle, qui peut dans chaque cas être une ou plusieurs fois substitué par alkyle en C₁-C₆, alcoxy en C₁-C₆ ou cyano ;
les X sont identiques ou différents et représentent, indépendamment les uns des autres, un atome d'halogène ; un groupe alkyle en C₁-C₁₈; un groupe aryloxy, arylthio, hétéroaryloxy ou hétéroarylthio, qui peut dans chaque cas être substitué par alkyle en C₁-C₁₂ ou alcoxy en C₁-C₁₂, dont la chaîne carbonée peut être interrompue par un ou plusieurs groupements -O-, -S-, -NR³-, -CO- et/ou -SO₂- et qui peut être une ou plusieurs fois substitué par alcoxy en C₁-C₆, par un radical hétérocyclique à 5- 7 chaînons, lié par un atome d'azote, qui peut contenir d'autres hétéroatomes et être aromatique et/ou par un groupe cycloalkyle en C₅-C₈, dont la chaîne carbonée peut être interrompue par un ou plusieurs groupements -O-, -S-, -NR³-, -CO- et/ou -SO₂- et qui peut être une ou plusieurs fois substitué par alkyle en C₁-C₆ ;
n vaut de 2 à 8.

5. Procédé selon la revendication 1, **caractérisé en ce qu'**on utilise comme oxydes d'étain dopés des oxydes d'étain dopés avec de l'antimoine ou de l'indium.

6. Procédé selon la revendication 1, **caractérisé en ce qu'**on utilise comme hexaborures de lanthanides et de métaux alcalino-terreux MB₆ l'hexaborure nanoparticulaire d'yttrium, de lanthane, de cérium, de praséodyme, de néodyme, de samarium, d'europium, de gadolinium, de terbium, de dysprosium, d'holmium, d'erbium, de thulium, d'ytterbium, de strontium ou de calcium.

7. Procédé selon les revendications 1 à 6, **caractérisé en ce que** la matière absorbant le rayonnement laser est incorporée dans la pièce en
matière plastique ou a été appliquée sur la pièce en matière plastique.

8. Procédé selon la revendication 7, **caractérisé en ce que** la matière absorbant le rayonnement laser a été incorporée dans la pièce en matière plastique par un processus d'extrusion, de moulage par injection, de moulage par soufflage ou de malaxage.

9. Procédé selon la revendication 7, **caractérisé en ce que** la matière absorbant le rayonnement laser a été appliquée sur la pièce en matière plastique par un processus d'enduction ou de stratification.

10. Procédé selon les revendication 1 à 9, **caractérisé en ce qu'**au moins l'une des pièces en matière plastique à assembler est un film.

11. Procédé selon les revendications 1 à 10, **caractérisé en ce que** les pièces en matière plastique à assembler sont constituées d'un polymère matrice, choisi dans le groupe des polyoléfines, copolymères de polyoléfines, polytétrafluoroéthylènes, copolymères éthylène/tétrafluoroéthylène, poly(chlorure de vinyle)s, poly(chlorure de vinylidène)s, poly(alcool vinylique)s, poly(ester vinylique)s, polyvinylalcanals, polyvinylcétals, polyamides, polyimides, polycarbonates, alliages de polycarbonate, polyesters, alliages de polyesters, poly(méth)acrylates, alliages poly(méth)acrylate-copolymère de styrène, alliages poly(méth)acrylate-poly(difluorure de vinylidène), polyuréthannes, polystyrènes, copolymères de styrène, polyéthers, polyéthercétones et polysulfones et des mélanges de ceux-ci.

12. Procédé selon les revendications 1 à 11, **caractérisé en ce que** les pièces en matière plastique à assembler sont constituées d'un polymère matrice, choisi dans le groupe des polyoléfines, copolymères de polyoléfines, polyvinylalcanals, polyamides, polycarbonates, alliages polycarbonate-polyester, alliages polycarbonate-copolymère de styrène, polyesters, alliages de polyesters, poly(méth)acrylates, alliages poly(méth)acrylate-copolymère de styrène, alliages poly(méth)acrylate-poly(difluorure de vinylidène), copolymères de styrène et polysulfones et des mélanges de ceux-ci.

13. Procédé selon les revendications 1 à 12, **caractérisé en ce que** les pièces en matière plastique à assembler sont constituées d'un polymère matrice, choisi dans le groupe constitué par le polypropylène, le polyvinylbutyral, le polyamide [6], le polyamide [6,6], le polycarbonate, des alliages polycarbonate-poly(êthylêne-têréphtalate), des alliages polycarbonate-poly(butylène-téréphtalate), des alliages polycarbonate-copolymère acrylonitrile/styrène/ acrylonitrile, des alliages polycarbonate-copolymère acrylonitrile/butadiène/styrène, des alliages poly(méthacrylate de méthyle)-copolymêre acrylonitrile/ butadiène/styrène (MABS), le poly(éthylène-téréphtalate), le poly(butylène-téréphtalate), le poly(méthacrylate de méthyle), le poly(acrylate de butyle), des alliages poly(mêthacrylate de méthyle)-poly(difluorure de vinylidène), des copolymères acrylonitrile/butadiène/styrène, des copolymères styrène/acrylonitrile et la polyphénylènesulfone.

14. Procédé selon les revendications 1 à 13, **caractérisé en ce qu'**on utilise un rayonnement laser ayant une longueur d'onde dans la plage de 700 à 12 000 nm.

15. Procédé selon les revendications 1 à 14, **caractérisé en ce qu'**on utilise un rayonnement laser ayant une longueur d'onde dans la plage de 700 à 1 200 nm.

16. Procédé selon les revendications 1 à 15, **caractérisé en ce que** les pièces en matière plastique à assembler sont constituées d'un polymère matrice transparent ou au moins translucide.

17. Procédé selon les revendications 1 à 16, **caractérisé en ce que** les pièces en matière plastique à assembler sont colorées avec des agents colorants.
